# EUROPEAN PATENT APPLICATION

(11) **EP 3 073 703 A1**
(43) Date of publication of application: **28.09.2016**
(21) Application number: 15305415.0
(22) Date of filing: 23.03.2015
(51) Int. Cl.: H04L 29/06, H04H 20/57, H04W 4/00, H04W 4/06, H04W 84/18

(54) **Method and system for sharing music and other audio content among mobile devices**

(71) Applicant: Laboratories Thomson Ltd., 8048 Zürich (CH)
(72) Inventor: Keller, Anton Werner, 8905 Arni (CH)
(74) Representative: Lindemann, Robert

(57) **Abstract**

A method and system for sharing an audio content item among mobile devices (22) utilizing a mobile application (100, 110) is provided. The mobile application (100, 110) enables a user (212) of a mobile device (222) to identify and contact another user (211) of another mobile device (221) based on the audio content item playing on that device (221) and to share listening to the audio content item among the devices (212, 222). Accordingly, the mobile application (100, 110) facilitates meeting people with, for example, a similar music taste. With the mobile application (100, 110), an audio content item can be broadcasted from a first mobile device (35) and can be received by a second mobile device (36) over a wireless connection between the two devices. The bit rate (41, 42) for broadcasting the audio content item can be differentiated depending on one or more conditions.

## Description

### TECHNICAL FIELD

The present invention generally relates to peer-to-peer data sharing and accessing and, more particularly, to a method and system for sharing an audio content item among mobile devices.

### BACKGROUND

The fast spreading of smart mobile devices has changed the way people create and share multimedia contents. Listening to music that is proposed by someone else is known from digital music services, such as "Spotify" or "iTunes". This kind of music sharing allows a "follower" to listen to music liked by a "leader", e.g., using a connection to a cloud service providing the music to be shared. Another alternative is a point-to-point connection for transmitting music by Bluetooth, as proposed by several mobile phone manufacturers.

The increasing number of personal devices with wireless communication capabilities makes the creation of spontaneous opportunistic networks possible, in which mobile devices communicate occasionally depending on contact opportunities. Opportunistic networks are typically composed of mobile and static nodes that are able to take advantage of opportunistic time-varying contacts and, thus, characterized by being highly dynamic. Mobile nodes adapted for participating in opportunistic networks are typically enabled to communicate with each other even if a central routing instance for connecting them does not exist. Furthermore, nodes are not supposed to possess or acquire any knowledge about the network topology.

An idea proposed by the article "What a juke! A collaborative music sharing system" by Zhaofei Chen et al., World of Wireless, Mobile and Multimedia Networks (WoWMoM), 2012 IEEE International Symposium, San Francisco, CA,USA is to distribute contents opportunistically when devices are within each other's communication range. Mobile devices are usually carried by the users and moved around according to users' mobility. Therefore any two mobile devices have a probability to stay within direct communication range in a certain public area which their users may get into. Media contents on the mobile devices then can be exchanged during these opportunistic short "meetings". Instead of communication with network address and routing protocols, the mobile devices can contact each other based on the contents they have. During a "meeting", i.e. when two mobile devices are within communication range, one of the devices checks the content on the other one and decide which to request. The opportunistic content-centric networking concept introduced in the article employs content-driven protocols and can be used for content dissemination among mobile devices using the devices' mobility. "Podnet" middleware architecture is disclosed according to such concept. Contrary to other known wireless ad hoc content sharing systems, here the concept of sharing does not aim at exchanging music files between neighboring nodes but rather to stream them to a central unit one at a time so that everyone can enjoy the music as long as they are in the vicinity. Typical venues to setup such a system can be bars and pubs, where people gather for entertainment, and at home.

Still the known prior art content sharing systems do not facilitate meeting people with a similar music taste and having the possibility of interaction.

### SUMMARY

With more and more people wearing headphones in the streets and other public places while listening to music content on their respective mobile devices it becomes more difficult for those people to get in contact with like minded peers. Based on music-taste users of mobile devices could easily identify like-minded users listening to music content on their mobile devices, if they had a chance to know what they are listening to. Embodiments of the invention will enable users of mobile devices to identify and contact another user of a mobile device based on the music content playing on his device and to share listening to the music content among the devices. Accordingly, embodiments of the invention facilitate meeting people with a similar music taste and having the possibility of interaction.

It is an advantage of embodiments of the invention that broadcasting the music a first person is currently listening on a mobile device is enabled and that at least a second person with a mobile device can pick up the broadcast, find out what the person broadcasting is currently listening, get in contact with the first person, and share his or her own music. It is a further advantage of embodiments of the invention that the music content sharing as disclosed could become part of a social network community, such as, for example, "Facebook".

It is an advantage of embodiments of the invention that the bit rate for broadcasting the audio content item, such as music or other audio content, can be differentiated depending on one or more conditions.

It is a further advantage of embodiments of the invention that information about an existing broadcast offered by a mobile device can be provided through Wi-Fi SSID or a public webpage.

According to embodiments of the present invention, a method for sharing an audio content item among at least two mobile devices is disclosed. The method comprises playing the audio content item on a first mobile device; broadcasting the audio content item using the first mobile device; detecting the broadcasted audio content item with a second mobile device; establishing a wireless connection between the first mobile device and the second mobile device; and receiving the broadcasted audio content item with the second mobile device in real time, targeted for immediate listening. Targeted for immediate listening in this context means that the audio content is reproduced as the stream is received, but some amount of buffering for compensating varying receiving conditions or the like may be present. The expression "real time" in the context of broadcasting content or receiving content means that the data representing the content is not transmitted or received in one piece before the reproduction actually starts. Rather, data is transmitted or received as required for reproduction in a streaming fashion. It is advantageous that the audio content item played on the first mobile device is only streamed and not copied to the second mobile device. It is an advantage that a localized wireless audio network, i.e. a network that does not require any infrastructure such as routers and access points, for shared listening of recorded music or other audio content can be established between the first mobile device and the second mobile device.

According to embodiments of the present invention, the method further includes broadcasting the audio content item at a first bit rate; and broadcasting the audio content item at a second bit rate that is higher than the first bit rate upon transmitting a request signal from the second mobile device and upon acceptance of the request at the first mobile device. The request may be accepted in response to a user input or automatically. Automatic acceptance of the request may be unconditional or conditional, e.g. when the requesting device provides identification information along with or in connection to the request, or when the requesting device also offers broadcasting of audio content, or the like. Other conditions are conceivable and are within the scope of the present invention.

According to embodiments of the present invention, the method further includes the step of establishing the wireless connection between the first mobile device and the second mobile device by establishing a wireless local area network (WLAN) in accordance with the Institute of Electrical and Electronics Engineers (IEEE) 802.11 standards.

According to preferred embodiments of the present invention, the method further includes the steps of transmitting an identification signal with a Wi-Fi transceiver of the first mobile device; requesting an IP-address with the Wi-Fi transceiver of the second mobile device; assigning the IP-address to the second mobile device thereby establishing a wireless connection between the first mobile device and the second mobile device; and starting the broadcast of the audio content item with the first mobile device upon receiving a request from the second mobile device.

According to preferred embodiments of the present invention, the method further includes detecting the broadcasted audio content item with at least one additional mobile device; establishing a wireless connection between the first mobile device and the at least one additional mobile device; and receiving the broadcasted audio content item with the second mobile device and the at least one additional mobile device in real time. It is advantageous that the first mobile device serves as a hotspot and, thus, additional mobile devices can join the localized wireless audio network.

According to preferred embodiments of the present invention, the method is implemented by a mobile application running on the first mobile device and the second mobile device. Once the mobile application is activated on the first mobile device and the second mobile device the wireless connection and the broadcast and reception of the audio content item are handled by the mobile application.

According to preferred embodiments of the present invention, the method further includes the step of activating a Wi-Fi transceiver when activating the mobile application.

According to preferred embodiments of the present invention, the method further includes the step of activating a Bluetooth transceiver when activating the mobile application.

According to preferred embodiments of the present invention, the method further includes the step of activating a Long Term Evolution (LTE) or Universal Mobile Telecommunication (UMTS) transceiver when activating the mobile application.

According to preferred embodiments of the present invention, the method further includes the step of activating an AM or FM transmitter or receiver when activating the mobile application, when receiving a request for broadcasting audio content, or when a request for broadcasting audio content has been accepted.

According to preferred embodiments of the present invention, the mobile application implementing the method provides different operating modes. The mobile application includes an off-mode, where the mobile application is turned off; an idling-mode, where the mobile application is sending an identifier; a broadcasting-mode, where the audio content item is steadily transmitted; a receiving-mode, where the broadcasted audio content item is received; and a tuning-mode, where the mobile application searches for the identifier and the broadcasted audio content item.

According to preferred embodiments of the present invention, the tuning-mode is activated during the idling-mode, the broadcasting-mode, or the receiving-mode.

According to preferred embodiments of the present invention, the method further includes the steps of providing a first broadcasting-mode, where the audio content item is broadcasted at a first, lower bit rate; and providing a second broadcasting-mode, where the audio content item is broadcasted at a second, higher bit rate.

According to preferred embodiments of the present invention, the method further includes the step of transmitting a genre or other identifier of the audio content item to be broadcasted or being broadcasted.

According to preferred embodiments of the present invention, the method further includes the step of interconnecting a social network with the mobile application.

According to embodiments of the present invention, a system for sharing an audio content item among at least two mobile devices is disclosed. The system comprises a mobile application and at least two mobile devices, each mobile device having the mobile application installed. The mobile application provides an off-mode, where the mobile application is turned off; an idling-mode, where the mobile application is sending an identifier; a first broadcasting-mode, where the audio content item is broadcasted at a low bit rate; a second broadcasting-mode, where the audio content item is broadcasted at a higher bit rate; a receiving-mode, where the broadcasted audio content item is received; and a tuning-mode, where the mobile application searches for the identifier and the broadcasted audio content item.

According to the advantageous embodiments of the present invention, a mobile application for sharing an audio content item among at least two mobile devices comprises software code and is adapted to perform the steps of the method for sharing an audio content item among at least two mobile devices.

According to an embodiment of the present invention a first wireless interface broadcasts an identifier, indicating availability of a broadcast, and optionally also indicating one or more of a genre and a title currently broadcast. The identifier may also provide information about a second wireless interface, over which the broadcast can be received. The second wireless interface includes one of an AM or an FM transmitter. The identifier may provide a frequency for tuning an AM or an FM receiver to the broadcast.

In an embodiment of the method the AM or FM broadcast is active when the user of a first mobile device listens to audio content. A user of a second mobile can simply tune an AM or FM transmitter to the broadcast and start to listen.

In another embodiment the AM or FM broadcast is not automatically active when the user of a first mobile device listens to audio content. In order to listen to the audio content the first user is listening to a user of a second mobile device needs to establish a connection between the second mobile device and the first mobile device using the first wireless interface, and request the first mobile device to activate a second wireless interface, e.g. an AM or FM transmitter, and broadcast the audio content. Information about the type of the second wireless interface and a frequency or the like may be conveyed over the connection established via the first wireless interface. Once the first mobile device has accepted the request it activates the AM or FM transmitter and broadcasts the audio content. The second mobile device tunes to the AM or FM broadcast and reproduces the broadcasted audio content. Accepting the request may depend from various conditions. For example, a user who wants to listen may have to identify to the first mobile device, e.g. by providing an email address, or social network contact information. The identification information may need to be confirmed prior to starting broadcasting. Accepting a request may also depend from the user of the second mobile device providing audio content in exchange for listening to the first user's audio content.

A non-transitory program storage device, readable by a computer, tangibly embodying a program of instructions executable by the computer to perform a method comprising: playing the audio content item on a first mobile device; broadcasting the audio content item by the first mobile device; detecting the broadcasted audio content item with a second mobile device; establishing a wireless connection between the first mobile device and the second mobile device; and receiving the broadcasted audio content item with the second mobile device in real time. It is advantageous that the audio content item played on the first mobile device is mapped and not copied to the second mobile device. It is an advantage that a localized wireless audio network for shared listening of recorded music or other audio content can be established between the first mobile device and the second mobile device.

### BRIEF DESCRIPTION OF THE DRAWINGS

Preferred embodiments of the invention are explained in more detail below by way of example with reference to the schematic drawings, which show:
Fig. 1 a schematic diagram of a group of mobile device users wearing headphones in a public place according to the prior art;
Fig. 2 a schematic diagram of a group of mobile device users wearing headphones in a public place in accordance with an embodiment of the invention;
Fig. 3 a flowchart illustrating a first contact between two users of a mobile device in accordance with an embodiment of the invention;
Fig. 4 a flowchart illustrating a second contact between two users of a mobile device in accordance with an embodiment of the invention;
Fig. 5 a flowchart illustrating a first changing of the broadcaster/follower setup in accordance with an embodiment of the invention;
Fig. 6 a flowchart illustrating a second changing of the broadcaster/follower setup in accordance with an embodiment of the invention;
Fig. 7 a flowchart illustrating a second contact between to users of a mobile device from an idling mode in accordance with an embodiment of the invention;
Fig. 8 a flowchart illustrating the establishment of a connection between a first user and a second user in accordance with an embodiment of the invention;
Fig. 9 a flowchart illustrating the establishment of a connection with two additional users in accordance with an embodiment of the invention;
Fig. 10 a schematic diagram illustrating the different modes of the mobile application in accordance with an embodiment of the invention;
Fig. 11 a schematic diagram of a system for sharing audio content items among mobile device users in accordance with an embodiment of the invention; and
Fig. 12 a schematic block diagram of an exemplary mobile device.

Similar or same elements are referenced with the same reference numbers.

### DESCRIPTION OF EMBODIMENTS

It will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

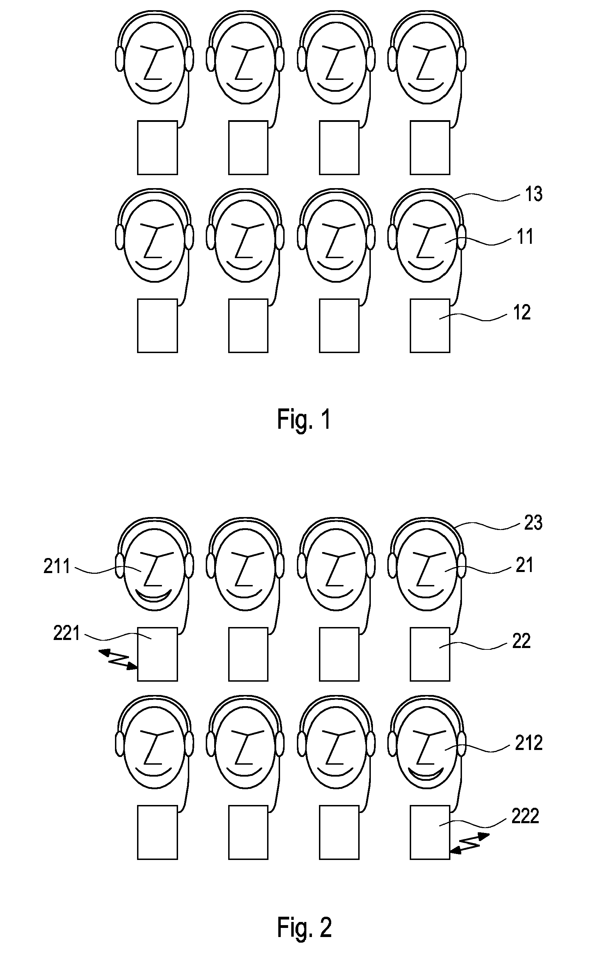

Referring to Fig. 1, a group of users 11 in a in a public place is illustrated according to the known prior art. Each user 11 is shown having a mobile device 12 and wearing a headphone 13. The mobile device 12 may have short-range communication capabilities. Each user 11 may be listening to music or other audio content on his mobile device 12. Public places may be, for example, but are not limited to a street, a train, a waiting area, or a restaurant. Mobile devices 11 may include, for example, but are not limited to smart phones, iPods, or tablet computers. With more and more people, the users 11, wearing headphones 13 in the streets and other public places while listening to music content on their respective mobile devices 12 it becomes more difficult for those people to get in contact with like-minded peers. Based on music taste users 11 of mobile devices 12 could easily identify like-minded users 11 listening to music content on their mobile devices 11, if they had a chance to know what they are listening to.

Referring to Fig. 2, a group of users 21 in a public place is illustrated in accordance with an embodiment of the invention. Each user 21 is shown having a mobile device 22 and wearing a headphone 23. Each user 21 may be listening to music or other audio content on his mobile device 22. Public places may be, for example, but are not limited to a street, a train, a waiting area, or a restaurant. Mobile devices 22 may include, for example, but are not limited to smart phones, iPods, or tablet computers. A first user 211 and a second user 212 are shown using a mobile application for sharing an audio content item, such as music or other audio content, in accordance with an embodiment of the invention. A mobile application or application software is commonly known as mobile app and is a computer program designed to run on mobile devices 22.

For example, the first user 211 is in a public space, such as a train, listening to a certain type of music, such as R&B (Rhythm & Blues) on a first mobile device 221, such as his mobile phone. The first user 211 is in the mood of "meeting" someone with the same music taste. The first user 211 turns on the mobile application in accordance with an embodiment of the invention and starts broadcasting the music currently played on his mobile device 221, e.g. via a Wi-Fi or Bluetooth connection. Instead of music, other audio content, such as, for example, voice recordings, or audio books, may be broadcasted by the first user 211. The generalized expression audio content item may be used for all audio content broadcasted. The broadcasting may comprise streaming of digital representations of the audio content targeted for reproducing audio content in real time on a receiving device, targeted for reproduction in real time meaning that some buffering may be present.

The second user 212 is in the same public space, for example, sits in the same train, and would like to listen to some good music but all radio stations do not seem appropriate and his own music library has been listened to so many times. The second user 212 turns on the mobile application in accordance with an embodiment of the invention on a second mobile device 222, such as his mobile phone. Contrary to the first user 211, the second user 212 does not broadcast audio content. Rather, he tries to find someone who broadcasts music he or she is currently listening to, i.e."tunes" to a broadcast of the first user. Tuning is preceded by searching for audio content broadcasted in the public space he is currently in and with a detector-like function of the mobile application the second user 212 discovers the broadcast of the first user 211. The second user 212 decides to listen to the music broadcasted by the first user 211. If a plurality of users broadcast whatever audio content they are listening to, the user may be presented a selection menu for selecting a broadcast he or she deems suitable.

After listening a while to the music or any other audio content broadcasted by the first user 211, the second user 212 may decide to become a steady "follower" of the first user 211 and sends a signal to the first user 211 indicating his desire, for example by pressing a request button. The first user 211 receives the information that he has a "follower" and may accept the request from the second user 212. If the first user 211 declines that request, the broadcasting may be interrupted. When the request is accepted the second user 212 may continue to listen to the music or other audio content broadcasted by the first user 211 until he leaves the transmission range. Whenever the second user 212 may come back into the transmission range of the first user 211, the second user 212 may get a message on the second mobile device 222 indicating this or the second user 212 may be connected automatically to the broadcasting of the first user 211. Accepting a request may also include broadcasting the audio content at a higher data rate than before receiving and accepting the request, providing a better audio quality to the "follower".

Streaming of the audio content may be coupled with use of social media. For example, the new contact can be implemented in a social network application, such as "Facebook"- like application and then allow exchanging text messages, pictures, or video-telephony.

The method for sharing an audio content item, such as music or any other type of audio content, among at least two mobile devices utilizing a mobile application in accordance with an embodiment of the invention will be described in detail below in reference to various flowcharts.

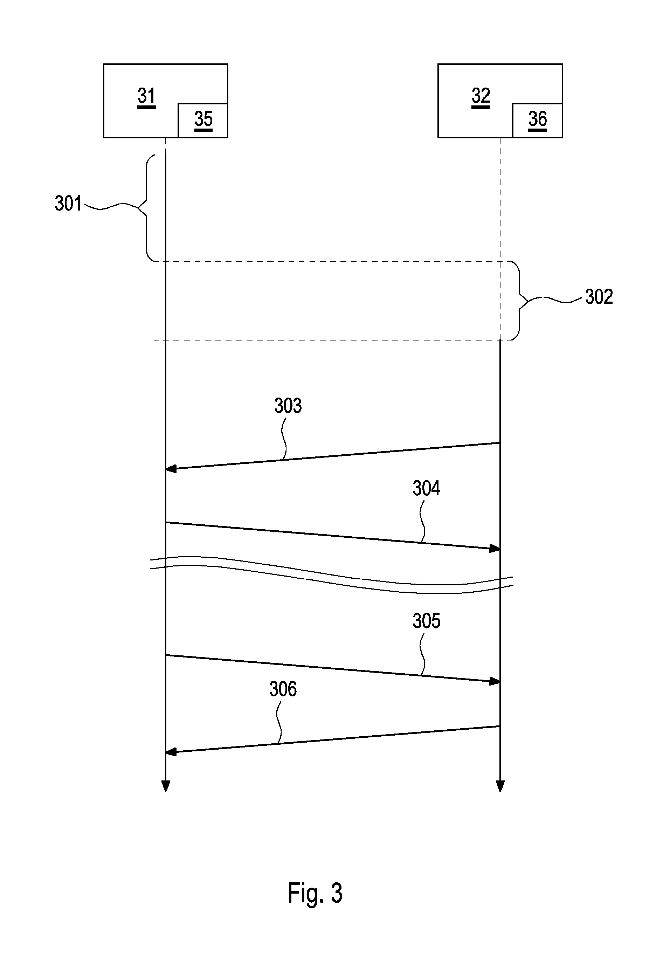

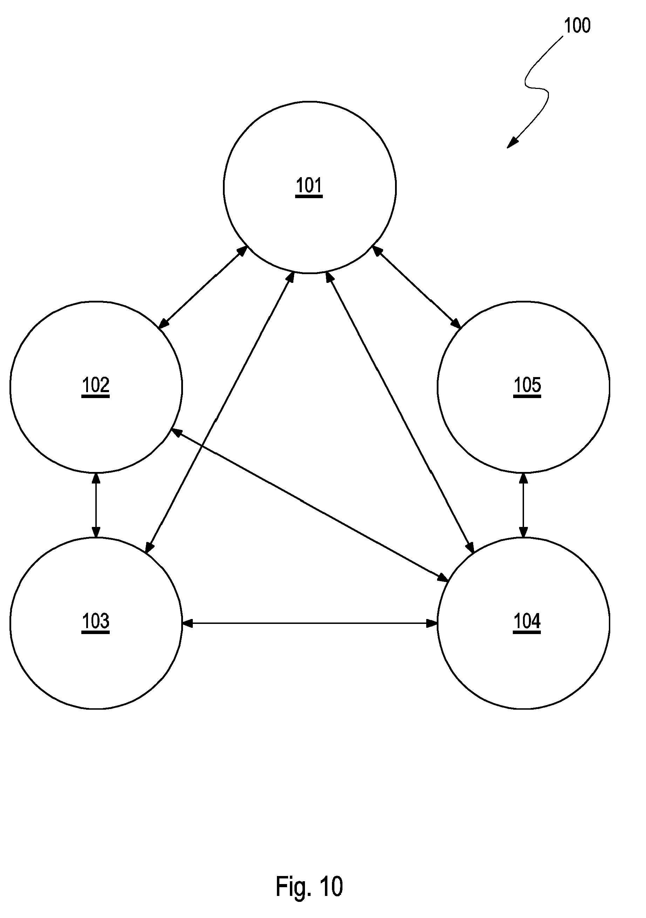

Referring to Fig. 3, a first contact between a first user 31 and a second user 32 is illustrated in accordance with an embodiment of the invention. In a first step 301, the first user 31 listens to music or other audio content on a first mobile device 35 and decides to broadcast the music or other audio content that is currently playing on the first mobile device 35. In order to do so, the first user 31 activates the mobile application in accordance with an embodiment of the present invention on the first mobile device 35, for example by pressing an activation button, and starts broadcasting the music or other audio content that is currently playing on the first mobile device 35. In a following step 302, the second user 32 activates the mobile application in accordance with an embodiment of the present invention, but uses a tuning-mode 105 (see Fig. 10) to search for music or other audio content broadcasted nearby. The second user 32 finds the music or other audio content broadcasted by the first user 31, tunes into the broadcasting and starts listening to the music or other audio content broadcasted by the first user 31. The second user 32 is now a silent listener, which means that the first user 31 may not be aware that the second user 32 listens to the music or other audio content broadcasted by the first user 31. In a following step 303, the second user 32 requests becoming an active follower of the first user 31 and sends a signal to the first mobile device 35, for example by pushing a request button. The decision to become an active follower may be based, for example, on the liking of the genre of the music or other audio content. In a following step 304, the first user 31 accepts the request and the second user 32 becomes an active follower of the first user 31. The first user 31 may now be listed on a list of broadcasters on the second mobile device 36 of the second user 32. By request or automatically, which can, for example, be a menu option, the first user 31 may become an active follower of the second user 32 in a following step 305. Once the second user 32 accepts that request, the first user may be listed on a list of followers on the second mobile device 36 of the second user 32 in a step 306, and may become a listener.

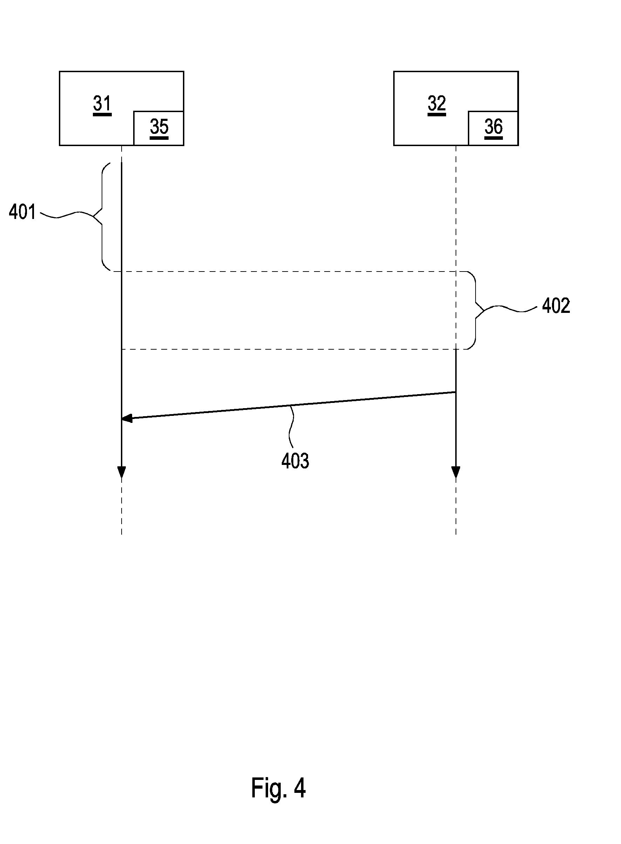

Referring to Fig. 4, a second contact between a first user 31 and a second user 32 is illustrated in accordance with an embodiment of the invention. In a first step 401, the first user 31 listens to music or other audio content on a first mobile device 35 and decides to broadcast the music or other audio content that is currently playing on the first mobile device 35. In a following step 402, the second user 32, who may have the mobile application in accordance with an embodiment of the present invention activated moves into the transmission range of the first user 31 and receives the information that the first user 31 is broadcasting the music or other audio content that is currently playing on the first mobile device 35. Since the second user 32 is already an accepted follower of the first user 31, the activation of a command to follow the first user 31 enabling the second user 32 to listen the music or other audio content broadcasted by the first user 31 can be done automatically or manually, which can be a menu option. The first user 31 and the second user 32 are now both listening to the music or other audio content that is played on the first mobile device 35 of the first user 31. In a step 403, the first user 31 may receive the information that the second user 32 is following and actively listens to the audio content the first user 31 is broadcasting.

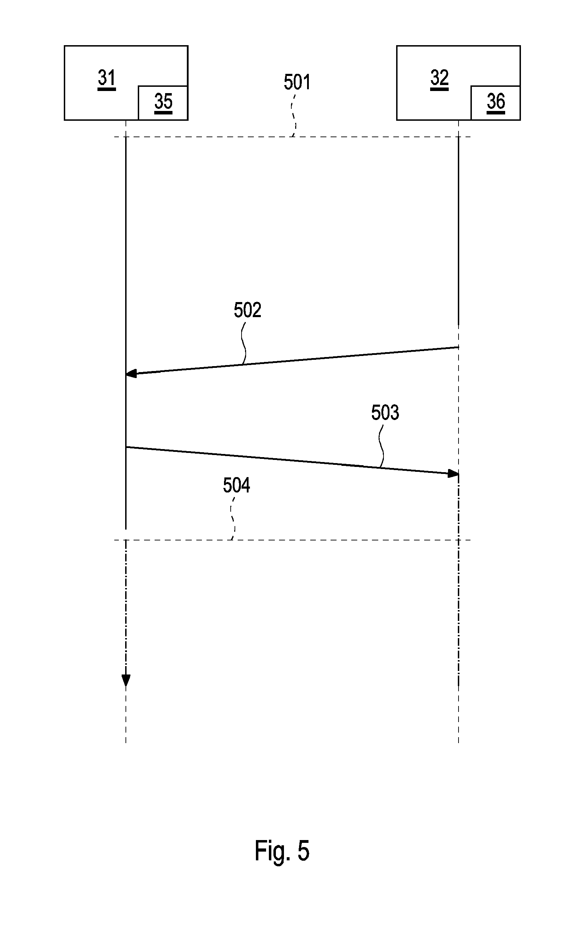

Referring to Fig. 5, a first changing of the broadcaster/follower setup is illustrated in accordance with an embodiment of the invention. The initial situation, step 501, may be that both the first user 31 and the second user 32 have the mobile application in accordance with an embodiment of the invention activated and that, as shown in Fig. 3, the first user 31 is broadcasting music or other audio content that is currently playing on the first mobile device 35 and that the second user 32 is actively following the first user 31, so that both, the first user 31 and the second user 32 are listening the audio content currently playing on the first mobile device 35 of the first user 31. In a following step 502, the second user 32 may propose to the first user 31 to listen to music or other audio content from the second mobile device 36. When the first user 31 accepts this offer in a step 503, then the second user 32 starts broadcasting music or other audio content from the second mobile device 36 in a step 504. The first user 31 and the second user 32 are now both listening to the music or other audio content that is played on the second mobile device 36 of the second user 32.

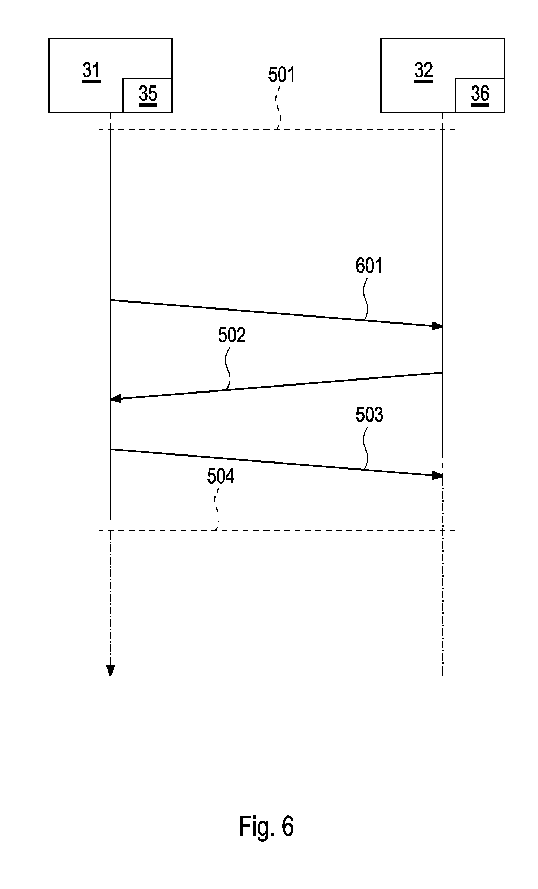

Referring to Fig. 6, a first changing of the broadcaster/follower setup is illustrated in accordance with an embodiment of the invention. Alternatively to the method as shown in Fig. 5, where the second user 32 proposes to the first user 31 to listen to music or other audio content from the second mobile device 36, the first user 31 may send a request to the second user 32 to play music or other audio content on the second mobile device 36 and to broadcast that content, in a step 601. The second user 32 may accept or decline such a request. When accepting the request, the first user 31 and the second user 32 may both be listening to the music or other audio content that is currently played on the second mobile device 36 of the second user 32, according to the steps 502 to 504 as described in connection with Fig. 5.

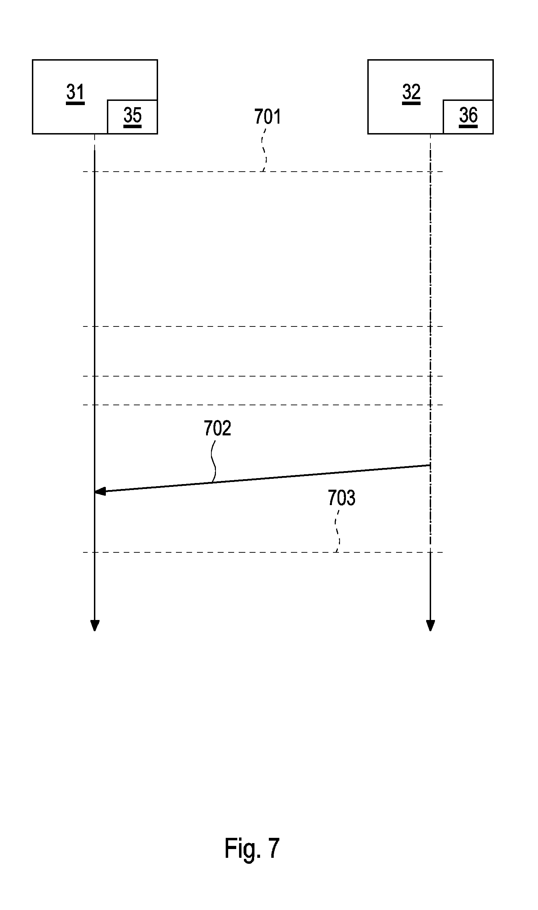

Referring to Fig. 7, a second contact between the first user 31 and the second user 32 while in an idling-mode 102 (see Fig. 10) is illustrated in accordance with an embodiment of the invention. In a first step 701, the first mobile device 35 and the second mobile device 36 are in an idling-mode 102, where the mobile application in accordance with an embodiment of the invention is activated on both mobile devices but neither mobile device broadcasts music or other audio content. Accordingly, the first user 31 is listening to music or other audio content playing on the first mobile device 35 and the second user 32 is listening to music or other audio content playing on the second mobile device. In the idling-mode 102, transmitters of both the first mobile device 35 and the second mobile device 36 are periodically sending an identification signal. Sending an identification signal is much more energy efficient than continuously broadcasting music or other audio content. Once the first user 31 and the second user 32 are within the transmission range of each others mobile devices 35 and 36, respectively, each mobile device will detect the identification signal of the other one in a step 702. This may happen automatically, e.g. when both the first user 31 and the second user 32 are on each other follower lists. In a next step 702, the second user 32 may request to follow the first user 31. In a further step 703, the first user 31 recognizes the second user 32 from the list of followers and may turn the broadcast on. Both the first user 31 and the second user 32 are now listening to the music or other audio content that is played on the first mobile device 35 of the first user 31. The identification signal may optionally comprise information about the audio content the respective user is currently listening to.

Idling of a wireless local area network (WLAN) is also called Power Save Mode (PSM). This is the original power-conservation technique defined in the standard IEEE802.11. The methodology is for the mobile device to suspend radio activity after a variable but predetermined period of inactivity, and then wake up periodically (usually about three beacon frames, which are normally 100 ms each) to see if the infrastructure has queued any traffic for it. This significantly improves battery life (6-8 hours idle on Wi-Fi connection without PSM compared to 3-4 days with PSM).

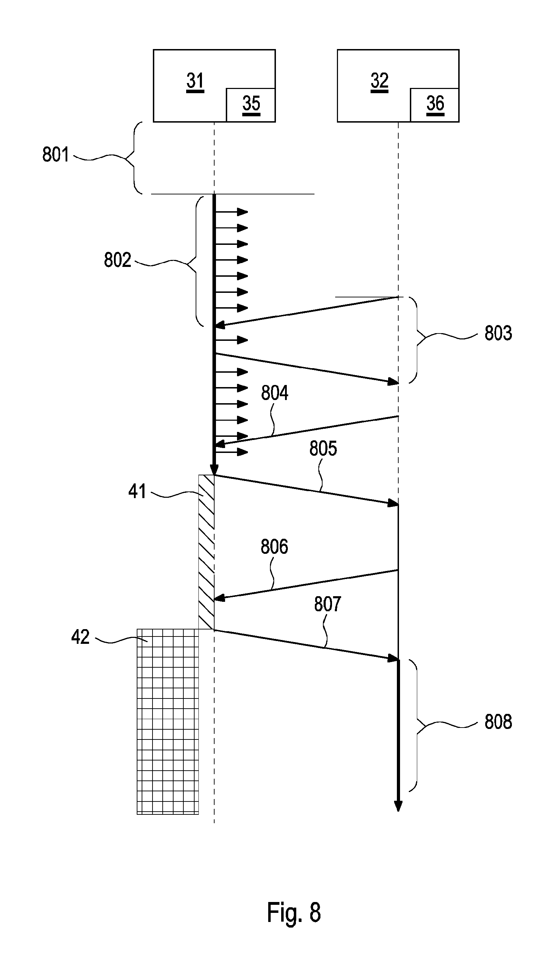

Referring to Fig. 8, the establishment of a connection between a first user 31 and a second user 32 supported by the Institute of Electrical and Electronics Engineers (IEEE) 802.11 standards is illustrated in accordance with an embodiment of the invention.

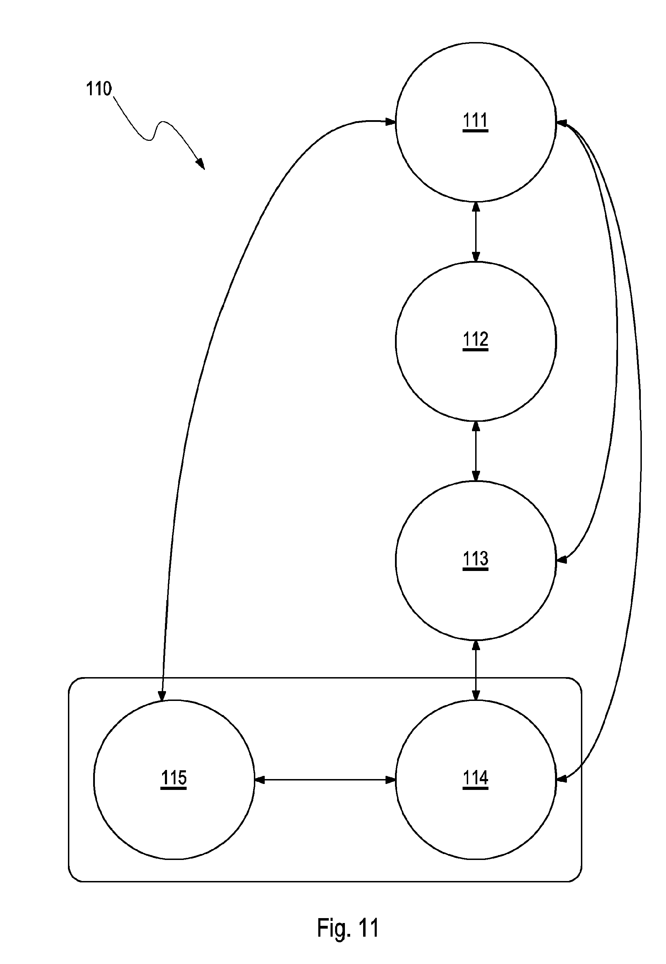

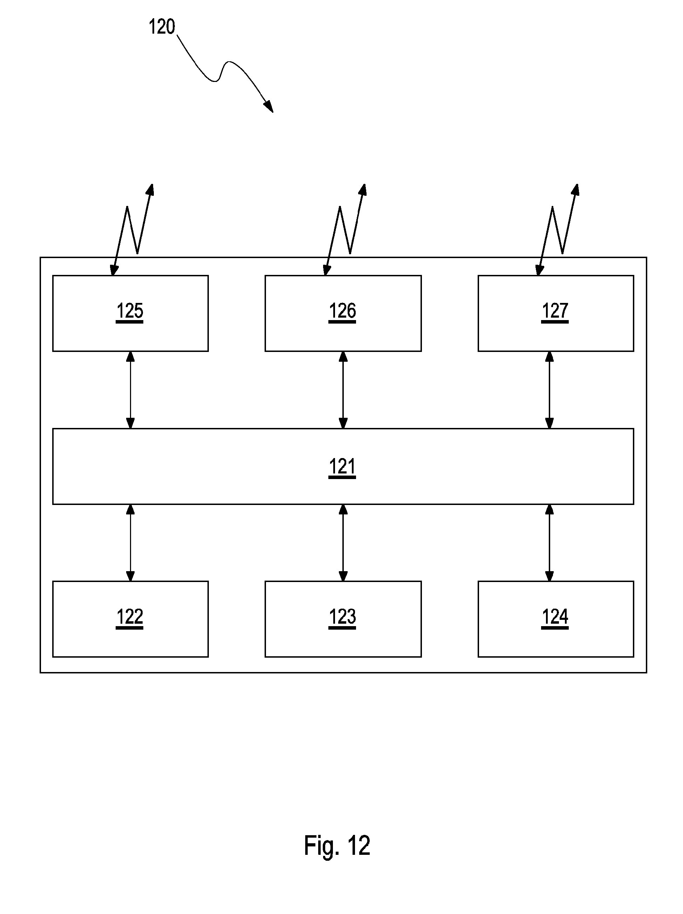

The first user 31, in this example the one that wants to broadcast the music or other audio content he is currently listening to on the first mobile device 35, activates the mobile application 110 (Fig. 11) installed on the first mobile device 35 in accordance with an embodiment of the present invention and, thus, the Wi-Fi in a hotspot-like fashion, in a step 801. In a next step 802, the Wi-Fi transceiver 126 (Fig.12) of the first mobile device 35 transmits periodically an identification signal (SSID) in the idling-mode 111 (Fig. 11). When the second user 32 with a turned on second mobile device 36 and an activated mobile application 110 (Fig. 11) enters the transmission range of the first mobile device 35, the Wi-Fi transceiver 126 of the second mobile device 36 tries to connect and gets an IP-address assigned by the Wi-Fi transceiver 126 of the first mobile device 35, in a next step 803. Accordingly, the Wi-Fi transceiver 126 of the first mobile device 35 operates like a hotspot, such as an active WLAN access point, and together, the first mobile device 35 and second mobile device 36 are part of a local network.

By a further request of the second user 32 in a step 804, the Wi-Fi 126 transceiver of the first mobile device 35 starts broadcasting music or other audio content at a low bit rate 41 (e.g. 32kB/s) in a step 805. A user datagram protocol (UDP) may be used for broadcasting. The second user 32 may start listening what he receives with the second mobile device 36 and may request for a higher resolution 42 in a step 806. This step is comparable with a friends-request in a social network and the second user 32 becomes detectable (displayed) for the first user and vice-versa. Then, the first user 31 sends the music or other audio content stream at a higher bit rate 42 (e.g. 256kB/s) in a step 807. The second user 32 may now listen to the music or other audio content broadcasted by the first user 31 in a higher quality in a step 808. The first user 31 may continue to broadcast in low resolution 41 in addition to the broadcasting in higher resolution 42. For the streaming the so called UDP (user datagram protocol) mode is of advantage because it is broadcast-like streaming to a controllable IP-address range and the recipient does not confirm the reception. Utilization of the UDP mode is well known in the art.

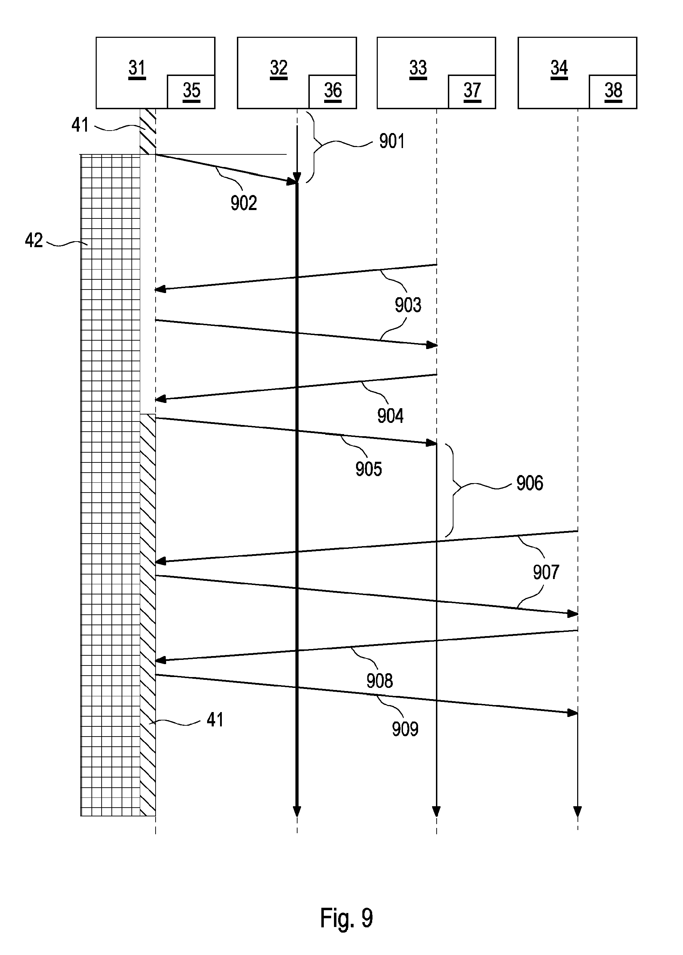

In Fig. 8 it is shown that the low-resolution stream stops until another user connects as a listener, as displayed in Fig. 9. It may be advantageous for the broadcasting mobile device, here the first mobile device 35, to send the higher resolution stream 42 scrambled, thereby avoiding uninvited listeners to profit.

Referring to Fig. 9, the establishment of a connection with two additional users, a third user 33 and a fourth user 34, is illustrated in accordance with an embodiment of the invention. Initially, the second user 32 is listening to the music or other audio content broadcasted by the first user 31 at a low bit rate 41, in a step 901. Then upon request, as described in connection with Fig. 8, the first user 31 starts broadcasting at a higher bit rate 41 in a step 902. While the second user 32 listens to the music or other audio content broadcasted by the first user 31 at a high bit rate and, thus in high quality, the third user 33 sends, through the Wi-Fi transceiver of the third mobile device 37, a request for connection and an IP-address, and the Wi-Fi transceiver of the first mobile device 35 sends the IP-address to the Wi-Fi transceiver of the third mobile device 37 in a step 903. By a further request of the third user 33 in a step 904, the Wi-Fi transceiver of the first mobile device 35 starts broadcasting music or other audio content at a low bit rate 41 (e.g. 32kB/s) in a step 905, in addition to the previously started broadcasting at a higher resolution 42. The third user 33 may now listen to the music or other audio content broadcasted by the first user 31 in low quality in a step 906. In a step 907, a fourth user 34 may use the mobile application 110 to request an IP-address from the Wi-Fi transceiver of the mobile device 35 of the first user 31. Once the IP-address is assigned, the fourth user 34 may then request to listen to the music or audio content broadcasted by the first user 31 at a low bit rate 41 in a step 908, and upon confirmation start listening to the music or other audio content in low quality in a step 909. Either one of the third user 33 and the fourth user 34 may request to listen to the broadcasted music or other audio content in a higher quality 42 according to steps 806 to 808, as shown in Fig. 8.

The passive listening of the second follower, such as the third user 33 in Fig. 9, can be achieved e.g. through Wi-Fi sniffing (passive, without traces) in accordance with an alternative embodiment of the invention. The Wi-Fi sniffing could be set up such that as soon as the low bit rate transmitting stops, the sniffed music will stop. Furthermore, the passive sniffing may not be possible when the broadcast source still is in the idling-mode 111 (Fig. 11), e.g. when no other user has requested broadcasting to begin.

Referring to Fig. 10, the different modes of the mobile application 100 as utilized in the examples illustrated in Figs. 3 to 9 are illustrated in accordance with an embodiment of the invention. The modes of the mobile application 100 may include an off-mode 101, an idling-mode 102, a broadcasting-mode 103, a receiving-mode 104, and a tuning-mode 105. In the off-mode 101 the mobile application is turned off. In the idling-mode 102 the mobile application 100 is only sending an identifier, such as an identification signal. This can be done continuously or intermittent. In the broadcasting-mode 103, music or other audio content is steadily transmitted and, thus continuously broadcasted. In the receiving-mode 104, music or other audio content is received and a user may listen to the music or other audio content of another user (a broadcaster). In the tuning-mode 105, the mobile application searches for identifiers and broadcasted music or other audio content. This mode can be active during the idling-mode 102, broadcasting-mode 103, and receiving-mode 104.

Additionally a mode where the first user 31 and the second user 32 broadcast for each other may be possible. Here, it may not strictly be necessary that the broadcaster is listening to music or other audio content broadcasted from his device. As an example, the first user 31 may broadcast music or audio content from playing on the first mobile device 35 for the second user 32 while listening to the music or other audio content broadcasted by the second user 32.

Referring to Fig. 11, a mobile application 110 for sharing audio content items among mobile device users, such as the first user 31, the second user 32, the third user 33 or the fourth user 34, is illustrated in accordance with an embodiment of the invention. In the mobile application 110, there are three levels of music or other audio content and the genre of the music or other audio content being implemented. It is not necessary to always implement all elements shown. In an idling mode 111 the mobile application 110 is only broadcasting an identifier, such as an identification signal (SSID). The mobile device, on which the mobile application 110 is running, acts in this mode 11 as a hotspot. A genre 112 of the music to be broadcasted or already being broadcasted may be transmitted in addition to the identification signal or in addition to the broadcasted music, respectively. Instead of a music genre, other identifier may be transmitted that characterize the audio content to be broadcasted or being broadcasted. This can be done automatically or upon request by another user. In a first broadcasting mode 113, the music or other audio content may be broadcasted at a low bit rate 41 (e.g. 32kB/s). In a second broadcasting mode 114, the music or other audio content may be broadcasted at a higher bit rate 42 (e.g. 256kB/s). If there is only one higher bit rate user, and the connection gets lost, the broadcasting mobile device (hotspot) goes into the idling mode 111. If there are several listeners, the broadcasting mobile device goes to the lowest bit rate necessary to continue broadcasting the music or other audio content in the first broadcasting-mode 113. Already accepted friends, or known friends from a different social network (e.g. Facebook) that may be interconnected with the mobile application in accordance with an embodiment of the invention can directly jump from detecting the hotspot 111 to receiving the higher bit rate streaming in the second broadcasting mode 114. In the receiving mode 115, a user listens to the music or other audio content broadcasted by another user (a broadcaster). The roles of being a receiver and, thus, in receiving mode 115, and being a broadcaster and, thus, in broadcasting mode 113 or 114 can be switched between the mobile devices forming a wireless local network. The mobile application in accordance with an embodiment of the invention allows the mobile device it is running on to take to switch between the various modes described.

Referring to Fig. 12, an exemplary mobile device 120, such as, for example, a smart phone, a tablet computer or a personal digital assistant (PDA), is illustrated. The mobile device 120 may be utilized as the first mobile device 35, the second mobile device 36, the third mobile device 37 or the fourth mobile device 38 as described above. The hardware needed to realize the mobile application 1100 or 110 in accordance with an embodiment of the invention is typically already present in modern mobile devices 120. A typical mobile device 120 may include a microprocessor 121 as a controller, a power management and power supply unit 122, a memory 123, and a user interface 124 including a display, speakers and sensors and transceiving units.

The transceiving units may include a mobile communication channel 125, such as 2G, 3G, or long-term evolution (LTE), a Wi-Fi transceiver 126 and a Bluetooth transceiver 127. The mobile device 120 does not necessarily have to include all three transceiving units and may also include more than the shown three units. The memory 123 may be used for example as a source for the music and other audio content. The complete functionality of the mobile application 100, 110 in accordance with an embodiment of the invention can be software-based and may use the three transceiving-blocks 125, 126, and 127 for broadcast and reception. No additional hardware may be needed.

The mobile application 100, 110 in accordance with embodiments of the invention may include further modes. For power saving, a switching procedure from a Wi-Fi connection to a Bluetooth connection may included as well as the switching from a Bluetooth connection to a Wi-Fi connection for a transmission range extension. This may be done automatically or manually. When the broadcaster answers a phone call the broadcasting of the music may not be interrupted.

When a relationship with a follower has been established it is also conceivable to continue the broadcast via the mobile data network (e.g. long-term evolution (LTE), universal mobile telecommunication system (UMTS) or the like) when the Wi-Fi connection starts fading. It might be advantageous to have a request/confirmation process with the users for the change to the mobile data network, since costs may be involved.

Information about an existing broadcasting by, for example the first user 31 (the broadcaster), may be provided through Wi-Fi SSID as described above or alternatively a public webpage.

In a more advantageous set-up the first user 31 may not only broadcast the music or other audio content but also some additional information related to the music or other audio content or related to his person. This additional information may support the second user 32 when deciding to listen to the stream of the first user or to another stream.

The mobile application can be extended to further functions known from other friendship or social network platforms (like Facebook), a profile of the owner and settings of privacy spheres, friend lists, a chat, meetings and more.

It is clear that the advantageous embodiments of the invention are not limited to music or other audio content. Movies or even games may be shared the same way as described above utilizing the mobile application in accordance with an embodiment of the invention.

### Reference Signs List

- 11: user
- 12: mobile device
- 13: headphones
- 21: user
- 211: first user
- 212: second user
- 22: mobile device
- 221: first mobile device
- 222: second mobile device
- 23: headphones
- 31: first user
- 32: second user
- 33: third user
- 34: fourth user
- 35: first mobile device
- 36: second mobile device
- 37: third mobile device
- 38: fourth mobile device
- 41: low resolution, low bit rate
- 42: higher resolution, higher bit rate
- 301, 302, 303, 304, 305, 306: method steps
- 401, 402, 403: method steps
- 501, 502, 503, 504: method steps
- 601: method step
- 701, 702, 703: method steps
- 801, 802, 803, 804, 805, 806, 807, 808: method steps
- 901, 902, 903, 904, 905, 906, 907, 908, 909: method steps
- 100: mobile application
- 101: off-mode
- 102: idling-mode
- 103: broadcasting-mode
- 104: receiving-mode
- 105: tuning-mode
- 110: mobile application
- 111: idling-mode
- 112: genre
- 113: first broadcasting-mode
- 114: second broadcasting-mode
- 115: receiving-mode
- 120: mobile device
- 121: microprocessor
- 122: power management and power supply unit
- 123: memory
- 124: user interface
- 125: mobile communication channel
- 126: Wi-Fi transceiver
- 127: Bluetooth transceiver

### Citation List

### Non-patent Literature

1. Title: "What a juke! A collaborative music sharing system" by Zhaofei Chen et al., World of Wireless, Mobile and Multimedia Networks (WoWMoM), 2012 IEEE International Symposium, San Francisco, CA, USA

## Claims

1. Method of accessing, by a second mobile device (222; 36), audio content played on and broadcasted by a first mobile device (221; 35) (221, 222; 35, 36) comprising, at the second mobile device:
detecting a broadcast signal carrying the audio content;
establishing a wireless connection with the first mobile device (221, 35); and
receiving the broadcasted audio content item for targeted for immediate reproduction in real time.

2. The method of claim 1, further comprising:
receiving the broadcasted audio content at a first bit rate (41);
transmitting a request to the first mobile device; and
receiving the audio content at a second bit rate (42) that is higher than the first bit rate (41) upon acceptance of the request at the first mobile device (221, 35).

3. The method of claim 1 or 2,
wherein the wireless connection between the first mobile device (221, 35) and the second mobile device (222, 36) is a wireless local area network (WLAN) in accordance with the Institute of Electrical and Electronics Engineers (IEEE) 802.11 standards.

4. The method of claim 3, further comprising:
receiving an identification signal from the first mobile device (221, 35);
requesting an IP-address from of the first mobile device;
receiving the IP-address in the second mobile device (222, 36) and establishing a wireless connection between the first mobile device (221, 35) and the second mobile device (222, 36);
sending a request to start broadcasting the audio content to the first mobile device (221, 35);
receiving the broadcasted audio content and substantially immediately reproducing the received audio content.

5. A method of providing audio content, from a first mobile device to a second mobile device, comprising:
reproducing audio content on the first device;
broadcasting a signal carrying or announcing the reproduced audio content; establishing a wireless connection with the second mobile device; and broadcasting audio content in real time.

6. The method of claim 5 further comprising:
transmitting the audio content at a first bit rate;
receiving a request from the second mobile device; and
transmitting the audio content at a second bit rate that is higher than the first bit rate upon accepting the request.

7. The method of one of claims 5 or 6, wherein the wireless connection between the first mobile device (221, 35) and the second mobile device (222, 36) is a wireless local area network (WLAN) in accordance with the Institute of Electrical and Electronics Engineers (IEEE) 802.11 standards.

8. The method of claim 7, further comprising:
transmitting an identification signal to the second mobile device;
receiving a request for an IP-address from the second mobile device;
assigning the IP-address to the second mobile device and establishing a wireless connection between the first and the second mobile device;
receiving a request to start broadcasting the audio content to the second mobile device; and
broadcasting the audio content in response to the request.

9. The method of claim 5, wherein, before a wireless connection with a second mobile device is established, in a first mode only an identifier is transmitted and, in a second mode, audio content played on the first device is transmitted at a first bit rate.

10. The method of any one of claims 5 to 9, further comprising:
transmitting a genre (112) or other identifier of the audio content item to be broadcasted or being broadcasted.

11. The method of any of claims 5 to 10, wherein at least one link to a social network is transmitted in the broadcasted signal carrying or announcing audio content.

12. The method of claim 5, further comprising, in case the audio content is announced by the broadcasted signal and after establishing the wireless connection:
receiving a request to broadcast the announced audio content;
enabling, in response to the request, a second wireless transmitter that is different from the wireless connection used for broadcasting the signal announcing the audio content; and
broadcasting the audio signal over the second wireless transmitter.

13. The method of claim 12, wherein the second wireless transmitter is one of an AM transmitter, an FM transmitter and a Bluetooth transmitter.
